# EUROPÄISCHE PATENTSCHRIFT

(11) **EP 0 649 968 B1**
(45) Veröffentlichungstag und Bekanntmachung des Hinweises auf die Patenterteilung: **06.03.1996**
(21) Anmeldenummer: 93116554.2
(22) Anmeldetag: 13.10.1993
(51) Int. Cl.: E05G 1/00, A47C 7/62, A45C 1/00, A45B 3/00, F16M 13/02

(54) **Verschliessbare Box**
Lockable box
Boîte verrouillable

(43) Veröffentlichungstag der Anmeldung: 26.04.1995
(73) Patentinhaber: Weigl, Adolf, D-83134 Prutting (DE)
(72) Erfinder: Weigl, Adolf, D-83134 Prutting (DE)
(74) Vertreter: Schaefer, Konrad, Dipl.-Phys.

(56) Entgegenhaltungen:
- EP-A- 0 321 120
- DE-B- 2 702 409
- GB-A- 347 853
- US-A- 3 005 614
- US-A- 5 035 464

## Beschreibung

Die Erfindung betrifft eine Box der im Oberbegriff des Anspruches 1 genannten Art.

In Strand-, Bade- oder Kurbetrieben sind üblicherweise dem Gast zugeordnete Möbelstücke bereitgehalten, wie beispielsweise Liegestühle, Tische, Sonnenschirme od. dgl. Diese werden üblicherweise dem Gast durch Kurzzeitvermietung zugeordnet. In solchen Betrieben sind regelmäßig auch verschließbare Boxen vorgesehen, beispielsweise zur Aufnahme der Straßenkleidung beim Wechsel gegen betriebsübliche Spezialbekleidung, wie beispielsweise Badebekleidung. Solche Boxen werden auch zur Aufnahme von Wertgegenständen bereitgehalten, um diese gegen Diebstahl zu sichern, was insbesondere bei Betrieben der genannten Art wichtig ist, bei denen der Gast zum Schwimmen od. dgl. Wertgegenstände nicht mitnehmen kann.

Nach dem Stand der Technik sind solche Boxen in einem vom Aufenthaltsbereich, in dem die erwähnten Möbelstücke aufgestellt sind, getrennten Bereich angeordnet, beispielsweise im Eingangsbereich oder in einem Umkleidebereich. Gäste, die beispielsweise zum Swimmingpools eines Hotels Wertgegenstände mitnehmen wollen, wie z.B. Kameras, goldene Feuerzeuge, Schmuck od. dgl., sind ungesichert.

Die DE-B-27 02 409 beschreibt eine Box der eingangs genannten Art, die nach Art einer Tragetasche mit Bügelgriff ausgebildet ist. Der Bügelgriff ist an seinem einen Ende über ein Schloß mit der Box lösbar verbunden, wobei dieses Schloß gleichzeitig zum Verschließen des Deckels dient. Diese Konstruktion bietet die Möglichkeit, die Box mittels des Schlosses gegen Diebstahl des Inhaltes zu sichern und gleichzeitig die Box gegen Diebstahl insgesamt durch Verbindung mit einem Möbelstück zu sichern, um das der Bügel geschlungen wird.

Nachteilig hierbei ist, daß die Box gegen Diebstahl der ganzen Box nur im verschlossenen Zustand gesichert ist und daß auch eine eindeutige Zuordnung zu einem Möbelstück nur im verschlossenen Zustand gegeben sein kann. Ferner ist die Box durch Umschlingung des Bügels nur lose mit einem Möbelstück verbindbar, hängt also an dem Möbelstück in undefinierter zufälliger Winkellage.

Die Aufgabe der vorliegenden Erfindung besteht darin, eine Box der eingangs genannten Art dahingehend auszubilden, daß bei guter Diebstahlsicherung sowohl des Inhaltes als auch der Box die Nutzbarkeit für den Gast verbessert und für den Betrieb, der die Box zur Verfügung stellt, die Organisation, insbesondere die Berechtigungsvergabe an Benutzer verbessert wird.

Diese Aufgabe wird erfindungsgemäß mit den Merkmalen des Kennzeichnungsteiles des Anspruches 1 gelöst.

Eine verschließbare Box an dem zugeordneten Möbelstück, beispielsweise dem gemieteten Tisch oder Sonnenschirm, schafft eine bequeme Sicherungsmöglichkeit für mitgebrachte Wertgegenstände der oben erwähnten Art. Vorteile bestehen offensichtlich für den Gast, aber auch für den Betreiber, der die erhöhte Bequemlichkeit und Sicherheit als Besuchsanreiz bieten kann. Durch die starre Befestigung der Box am Möbelstück wird diese gegen Diebstahl der gesamten Box auch im unverschlossenen Zustand gesichert. Das Verschließen der Box und die Befestigung am Möbelstück sind bei dieser Konstruktion nicht, wie beim Stand der Technik, kombiniert. Die starre Befestigung erlaubt ferner die Zusatznutzung der Box, beispielsweise als Tisch, was bei der Box nach dem Stand der Technik ebenfalls nicht möglich ist. Mit der Kippeinrichtung läßt sich die Box in zwei Winkelstellungen bringen, von denen die eine die Gebrauchsstellung und die andere eine Reservestellung mit deutlich abweichender Winkelstellung ist. Hierdurch ergeben sich eine Reihe von Vorteilen sowohl für den Gast als auch für den Betreiber. An der Winkelstellung der Box, die deutlich ins Auge fällt, kann sofort erkannt werden, ob ein Liegestuhl besetzt oder noch frei ist. Dies ist ein Vorteil sowohl für den einen Platz suchenden Gast als auch für den Betreiber, der einem Gast einen Liegestuhl zuweisen will. Sodann besteht die Möglichkeit, die Reservestellung in einem derartigen Winkel vorzusehen, daß die Benutzung der Box zu Beladezwecken und insbesondere zu sonstigen Verwendungszwecken, wie beispielsweise als Beistelltisch, unmöglich gemacht wird. Die Winkelabweichung kann vorteilhaft 45° betragen. Dadurch wird bei rechteckiger Ausbildung der Box vermieden, daß irgendeine ihrer Flächen als Tischfläche waagerecht steht. Ein unberechtigter Benutzer wird gezwungen, entweder auf die Vorteile der Box zu verzichten oder diese durch Aufrichten in die Gebrauchsstellung weithin sichtbar in Benutzung zu nehmen. Die winkelabweichende Reservestellung kann auch Vorteile für den Betrieb im Freien bilden, wenn sie derart ausgebildet ist, daß in dieser Winkelstellung die Box gegen Eindringen von Regenwasser geschützt ist. Es sind beide Stellungen durch Arretierung gesichert, wobei die Box in der Reservestellung abschließbar ist. Hierdurch läßt sich die Box gegen unbefugte Benutzung sichern. Für den Betreiber ergibt sich die Möglichkeit, ein abgesichertes Vergabesystem einzurichten, bei dem beispielsweise die Swimmingpoolaufsichtsperson mit einem für alle Kippeinrichtungen passenden Schlüssel ausgerüstet ist und gegen Entgelt Boxen freigibt. Von großem Vorteil an dieser Ausbildung ist insbesondere auch, daß die Freigabe der Box und das Verschließen der Box mit getrennten Schließsystemen erfolgt, wie weiter unten noch ausgeführt wird.

Vorteilhaft sind die Merkmale des Anspruches 2 vorgesehen. Ein Liegestuhl ist in der Regel das Möbelstück, das am gezieltesten einem Gast zugeordnet wird. Es besteht hierbei der Vorteil, daß die Vermietung des Liegestuhles mit der Vermietung der Box auf einfache Weise kombiniert werden kann, was dem Betreiber die Möglichkeit zur Betriebsrationalisierung bietet.

Vorteilhaft sind die Merkmale des Anspruches 3 vorgesehen. Auf diese Weise ist insbesondere die Möglichkeit gegeben, Boxen an vorhandenen Möbelstücken, wie beispielsweise Liegestühlen, nachzurüsten. Auch kann die Box zu Wartungs- oder Reparaturzwecken abgenommen werden oder beispielsweise in der Zwischensaison getrennt gelagert werden.

Wenn Wertgegenstände in einer verschlossenen Box gelagert sind, so besteht die Gefahr, daß die Box im Ganzen entwendet wird. Ist sie an einem Möbelstück dauerhaft befestigt, so ist diese Gefahr wesentlich verringert, da die Wegnahme eines ganzen Möbelstückes mit anhängender Box auffällig und aufwendig ist. Bei abnehmbarer Befestigung der Box amn Möbelstück besteht die Gefahr, daß die Box zum Entwenden vom Möbelstück abgenommen wird. Diese Gefahr wird durch die Merkmale des Anspruches 4 wesentlich verringert.

Vorteilhafte Ausgestaltungen der Kippeinrichtungen ergeben sich aus den Ansprüchen 5 und 6. Diese Konstruktion ist kostengünstig fertigbar und zeichnet sich durch große Robustheit aus.

Vorteilhaft sind bei vom Möbelstück abnehmbarer Box die Befestigungsmittel gemäß den Merkmalen der Ansprüche 7 bis 11 ausgebildet.

Durch Winkeljustiereinrichtungen läßt sich bei der Montage die Box in die Gebrauchsstellung justieren, bei der sie beispielsweise als Beistelltisch mit einer ebenen Oberfläche verwendbar ist. Durch die Bedienbarkeit der Winkeljustiereinrichtungen ausschließlich mit Spezialwerkzeug wird das einfache Lösen der Befestigungsmittel zu Wegnahmezwecken erschwert. Durch die Ausbildung der Winkeljustiereinrichtungen als Klemmkupplungen wird eine einfache Konstruktion ermöglicht, bei der Kugelkupplungen für Winkelverstellung in allen Richtungen sorgen. Die Ausbildung der Winkeljustiereinrichtungen mit Überlastauslösung dient Sicherheitszwecken. Wenn sich ein Gast unvorsichtig auf eine Box setzt, so kippt er nicht das Möbelstück um, sondern es klappt nur die Box ab. Klemmkupplungen, wie beispielsweise Kugelkupplungen, können auf sehr einfache Weise zur Überlastauslösung ausgerüstet sein.

Die Box ist vorteilhaft gemäß den Merkmalen 12 oder 13 verschließbar. Ein Vorhängeschloß kann an den Gast in die Betriebsführung und die Bequemlichkeit des Gastes verbessernder Weise in Dauervermietung für den gesamten Urlaub vermietet werden. Es paßt an sämtliche vorhandenen Boxen, so daß der Gast in der Wahl des jeweiligen Liegeplatzes frei ist. Sind die Boxen mit verschließbarer Kippeinrichtung ausgebildet, so kann beispielsweise die Swimmingpoolaufsichtsperson in gesondertem Vergabeverfahren die Zuweisung der Plätze über die Entsperrung der Boxen regeln. Auf diese Weise lassen sich allseitig zufriedenstellende Vergabeverfahren einrichten. Die Verwendung von Zahlencodeschlössern als Vorhängeschlösser hat den Vorteil, daß der Gast beispielsweise zum Schwimmen nicht einen Schlüssel mitnehmen muß.

Vorteilhaft ist die Box gemäß den Merkmalen 14 und 15 mit einem Aschenbecher und/oder einer Aufnahme für Trinkbecher ausgerüstet. Dies erhöht den Comfort für den Benutzer und hat für den Betreiber den Vorteil, daß die Verunreinigung des Geländes durch weggeworfene Zigarettenkippen oder umkippende Becher reduziert wird. Auch erhöht sich dadurch dieBereitwilligkeit der Benutzer zur Anmietung von Boxen, die durch den erzielten Mehrfachnutzen an Attraktivität gewinnen.

Gemäß den Ansprüchen 16 und 17 ist die Box vorteilhaft derart ausgebildet, daß sie beim Kippen in die Reservestellung automatisch verschlossen wird. Dadurch werden unberechtigte Personen, denen die Box nicht ausdrücklich unter Verstellung in die Gebrauchsstellung zugewiesen wurde, an der Benutzung zu Verschließzwecken gehindert. Die automatisch verschließende Einrichtung kann auf sehr einfache Weise als auf die Winkelkippung ansprechende Pendelsperre ausgebildet sein.

In den Zeichnungen ist die Erfindung beispielsweise und schematisch dargestellt. Es zeigen
- Fig. 1: eine Ansicht einer erfindungsgemäßen Box in Achsrichtung der Kippeinrichtung und
- Fig. 2: einen Schnitt nach Linie 2 - 2 in Fig. 1.

Die Figuren zeigen eine Box 1, die über eine Kippeinrichtung 2 und Befestigungsmittel 3 lösbar an einem Rohr 4 eines im übrigen nicht dargestellten Liegestuhles befestigt ist.

Die Befestigungsmittel weisen im dargestellten Ausführungsbeispiel eine zur Klemmbefestigung am Rohr 4 geeignete Rohrschelle 5 auf, die mit Schrauben 6 festklemmbar ist. Wenn an Liegestühlen ein geeignetes Rohr im gewünschten Anbringungsbereich der Box nicht verfügbar ist oder falls die Box beispielsweise an einer Tischplatte befestigt werden soll, kann anstelle der Rohrschelle 5 eine andere ausreichend sicherbare Halterung vorgesehen sein.

Über einen Arm 7 ist die Rohrschelle 5 mit einer Kugel 8 verbunden. Eine weitere Kugel 9 trägt eine Traverse 10 der Kippeinrichtung 2.

Zwei Klemmschalen 11, jeweils mit Halbkugelschalenausbildung an ihren Enden umgreifen mit diesen die beiden Kugeln 8 und 9 und sind mit einer Spannschraube 12 gegeneinander gespannt, so daß sie an ihren Enden die Kugeln 8 und 9 klemmend halten.

Nach Lösen der Spannschraube 12 kann an beiden Kugeln 8 und 9 die Winkelstellung verändert werden. Bei beliebiger, z.B. auch schräger Anordnung des Rohres 4 kann stets die Traverse 10 der Kippeinrichtung 2 und somit die Box 1 in die gewünschte Winkelstellung justiert werden.

Anstelle der beiden vorgesehenen Kugelgelenke mit den Kugeln 8 und 9 kann auch ein einzelnes Kugelgelenk für die gewünschten Verstellzwecke ausreichen. Außerdem können anstelle von Kugelgelenken einfachere, um Achsen verschwenkbare Klemmgelenke oder sonstige winkelverstellbare Einrichtungen vorgesehen sein.

Sowohl die Klemmschraube 12 als auch die Schrauben 6 der Rohrschelle 5 sind vorzugsweise derart ausgebildet, daß sie nur mit Spezialwerkzeug bedienbar sind. Sie können beispielsweise von der üblichen Sechskantform abweichende Köpfe aufweisen.

Die Kugeln 8, 9, die in den Klemmschalen 11 mittels der Spannschraube 12 unter Beibehaltung ihrer einjustierten Winkelstellung klemmend gehalten sind, können vorzugsweise mit rauhen, z.B. genoppten Oberflächen ausgebildet sein, wobei die Klemmschalen 11 in ihren Kugelaufnahmen ebenfalls entsprechende Oberflächen ausbildung aufweisen. Dadurch wird eine sichere Aufrechterhaltung der gewählten Winkelstellung gewährleistet.

Die auf diese Weise als Kugelklemmkupplungen ausgebildeten Winkeljustiereinrichtungen 8, 11 und 9, 11 gewährleisten eine Überlastauslösung bei Überlastung der Box 1, wenn sich beispielsweise eine Person unvorsichtigerweise auf die Box setzt. Die Klemmkupplungen 8, 11 oder 9, 11 werden dann überlastet und geben rutschend nach, ohne daß es zu Zerstörungen kommt. Es klappt einfach die Box 1 herunter. Ein Umkippen des Liegestuhles aufgrund zu hoher Drehmomentbeaufschlagung des Rohres 4 wird verhindert.

Die Kippeinrichtung 2 weist an den Enden der Traverse 10 zwei parallel stehende untere Lagerblöcke 13 und 14 auf, die auf einer Achse 15 gelagert sind, welche durch Justieren der Befestigungsmittel 3 waagerecht ausgerichtet ist.

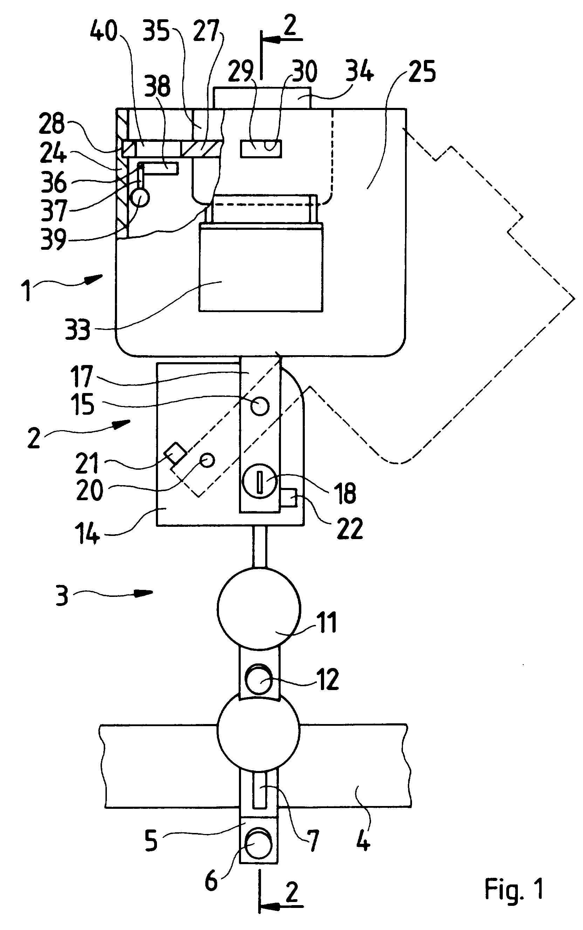

Auf der Achse 15 sind außerdem zwei obere Lagerblöcke 16 und 17 gelagert, die die Box 1 tragen. Die unteren Lagerböcke 13 und 14 sind über die Befestigungsmittel 3 ortsfest am Rohr 4 des Liegestuhles gehalten. Die Box 1 kann durch Verschwenken ihrer oberen Lagerblöcke 16 und 17 um die Achse 15 gekippt werden, wie dies Fig. 1 mit der ausgezogenen Darstellung und der gestrichelten Darstellung der Box und des oberen Lagerbockes 17 zeigt.

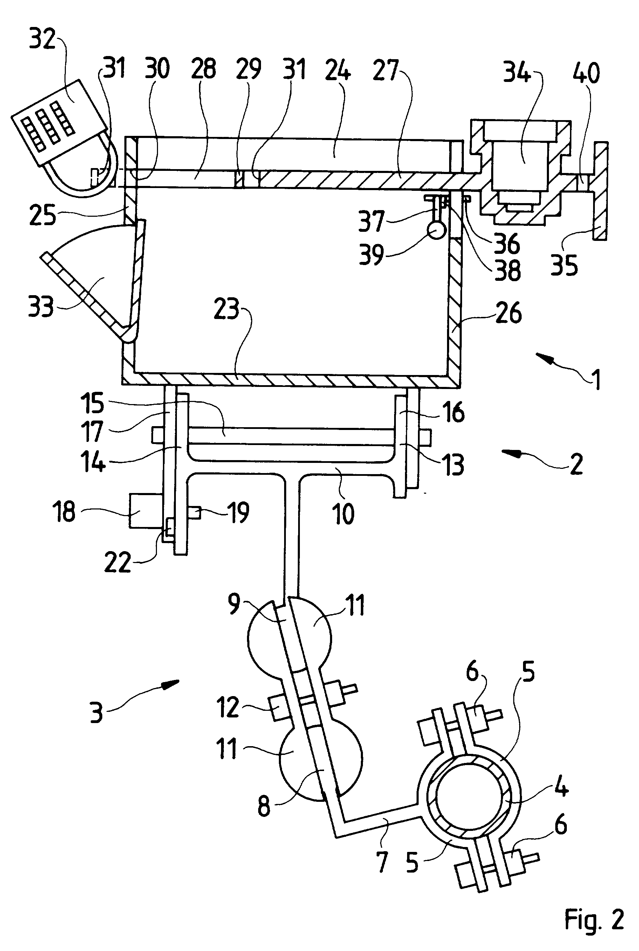

Der an der Box 1 befestigte obere Lagerbock 17 trägt ein Schloß 18, das als Zylinderschloß ausgebildet ist. In Fig. 1 ist in Achsansicht des Zylinders des Schlosses 18 dessen Schlüsselschlitz erkennbar. Das Schloß, dessen Einzelheiten nicht näher dargestellt sind, weist einen parallel zur Achse 15 angeordneten Sperrzapfen 19 auf (siehe Fig. 2). Das Schloß ist derart ausgebildet, daß im aufgeschlossenen Zustand der Sperrzapfen 19 ins Schloß zurückgezogen ist und in abgeschlossener Stellung vorgeschoben ist bis in die in Fig. 2 dargestellte Position. In dieser Position greift er in die Bewegungsbahn des an der Traverse 10 der Kippeinrichtung 2 vor gesehenen unteren Lagerbockes 14 ein, wenn dieser sich relativ zum an der Box 1 angeordneten oberen Lagerbock 17 bewegt.

Im unteren Lagerbock 14 sind parallel zur Achse 15 zwei Bohrungen vorgesehen, von denen eine Bohrung 20 in Fig. 1 sichtbar ist. Die andere Bohrung liegt in Ansicht der Fig. 1 unsichtbar hinter dem Schloß 18. In der in den Figuren ausgezogen dargestellten Gebrauchsstellung der Box 1 greift der Sperrzapfen 19 in die nicht sichtbare Bohrung. Nach Entriegeln des Schlosses 18, also Zurückziehen des Sperrzapfens 19 kann die Box in die in Fig. 1 gestrichelt dargestellte Reservestellung gekippt werden und dort durch Abschließen gesichert werden. Der Sperrbolzen 19 greift dann in die Bohrung 20.

Endanschläge 21 und 22, die auf dem Lagerbock 14 angeordnet sind und den Schwenkbereich des Lagerbockes 17 begrenzen, sorgen dafür, daß die beiden in Fig. 1 dargestellten Winkelstellungen der Box auf einfache Weise durch Verkippen bis zum Endanschlag eingestellt werden können.

Die Kippeinrichtung 2 kann gegenüber der dargestellten Ausführungsform weitgehend variiert werden. Unter Umständen reichen ein einzelner massiver oberer Lagerblock und entsprechend ein einzelner massiver unterer Lagerblock für die Kipplagerung aus. Auch hinsichtlich der Verschließbarkeit sind Varianten möglich. So reicht es für den angestrebten Verwendungszweck aus, die Box nur in der Reservestellung abzuschließen. In der Gebrauchsstellung kann sie auf andere Weise, z.B. eine Verriegelung, standsicher arretiert werden.

Die Box 1 weist im Ausführungsbeispiel einen rechteckig wannenförmig gebildeten Hauptkörper geeigneter Wandstärke auf, der vorteilhaft im Kunststoffspritzgußverfahren einstückig mit den oberen Lagerböcken 16 und 17 hergestellt ist. Eine Bodenwand 23 trägt die der Box 1 zugeordneten oberen Lagerböcke 16 und 17. Von der Bodenwand 23 ragen Seitenwände auf. Zwischen den Seitenwänden verlaufen eine Frontwand 25 und eine Rückwand 26.

Ein Deckel 27 ist als Schiebedeckel seitlich in Nuten 28 der Seitenwände 24 verschiebbar gelagert.

In Fig. 2 ist der Deckel 27 in halb geöffneter Stellung dargestellt. An seinem, der Frontwand 25 zugewandten Rand weist er eine vorspringende Lasche 29 auf, die durch einen passenden Schlitz 30 in der Frontwand in Schließstellung des Deckels 27 mit einer Bohrung 31 hindurchragt, wie in Fig. 1 gestrichelt dargestellt. Es kann dann vor der Frontwand 25 ein Vorhängeschloß 32 mit seinem Bügel durch die Bohrung 31 verlegt werden, wodurch die Box 1 wirksam verschlossen wird. Das Vorhängeschloß 32 ist vorzugsweise, wie in Fig. 2 dargestellt, als Zahlencodeschloß handelsüblicher Ausbildung mit Dreiziffernkombination ausgebildet.

Anstelle des dargestellten Deckels 27, der als Schiebedeckel ausgebildet ist, kann auch ein Klappdeckel vorgesehen sein, der beispielsweise an der Rückwand 26 mit Scharnieren angelenkt ist und an der Frontwand 25 mit dem Schloß 32 gesichert werden kann.

Obwohl das Verschließen der Box 1 mit einem Vorhängeschloß 32 vorgezogen wird, kann zum Verschließen der Box, also zum Verschließen des Deckels 27 auch ein anderes Schloß, beispielsweise ein in der Box integriertes Schloß mit Schlüssel vorgesehen sein, das beispielsweise nach Art eines Schlosses für Schrankschubladen ausgebildet ist.

In der Frontwand 25 der Box ist ein Aschenbecker 33 angeordnet, der in von Personenkraftwagen her bekannter Ausbildung herausklappbar ausgebildet ist, wie dies der Schnitt der Fig. 2 zeigt.

Im Deckel 27 der Box 1 ist eine Aufnahme 34 für Trinkbecher vorgesehen. Die Aufnahme 34 ist rotationssymmetrisch zu einer senkrecht zum Deckel 27 stehenden Achse ausgebildet und weist mehrstufig mehrere Innendurchmesser auf, die den sicheren Halt von Trinkbechern unterschiedlichen Durchmessers, Flaschen, Dosen od. dgl. gewährleisten. Die Aufnahme 34 kann einstückig mit dem Deckel 27 im Kunststoffspritzguß hergestellt werden. Um den Durchtritt der auch nach unten den Deckel 27 überragenden Aufnahme 34 durch die Rückwand 26 der Box 1 zu ermöglichen, ist ein Teilstück 35 der Rückwand 26 ausgeschnitten und am rückseitigen Ende des Deckels 27 vorgesehen.

An der Rückwand 26 unmittelbar unter dem Deckel 27 ist mit einer parallel zum Deckel 27 stehenden Achse 36 eine Pendelsperre schwenkbar gelagert. Diese weist mit der Achse 36 schwenkbar gelagert einen Kniehebel auf, der aus einer Pendelstange 37 und einem rechtwinklig zur Pendelstange 37 ausgebildeten Riegel 38 besteht. Am unteren Ende der Pendelstange 37 hängt ein Pendelgewicht 39.

In der in den Fig. 1 und 2 ausgezogen dargestellten Gebrauchsstellung der Box 1 mit waagerecht stehendem Deckel 27 hängt die Pendelsperre unter der Einwirkung des Pendelgewichtes 39 mit lotrechter Pendelstange 37 und waagerecht stehendem Riegel 38 außer Eingriff mit dem Deckel 27. Wird die Box 1 in die in Fig. 1 gestrichelt dargestellte Reservestellung gekippt, so hängt die Pendelstange 37 immer noch lotrecht und hält den Riegel 38 waagerecht. Dieser greift nun aber in den Deckel 27 ein, der zu diesem Zweck an geeigneter Stelle einen Schlitz 40 aufweist. Der Deckel 27 ist also in der gekippten Reservestellung der Box 1 automatisch gesperrt, auch wenn das Vorhängeschloß 32 nicht angebracht ist. Beim Rückkippen in die Gebrauchsstellung wird der Deckel 27 automatisch durch Zurückschwenken des Riegels 38, der immer waagerecht stehen bleibt, wieder freigegeben.

## Patentansprüche

1. Verschließbare und mit einem Möbelstück (4) verbindbare Box zur Aufnahme von Wertgegenständen, für Strand-, Bade- oder Kurbetriebe mit den Benutzern von Boxen zuzuordnenden Möbelstücken, **dadurch gekennzeichnet**, daß die Box (1) an dem Möbelstück (4) starr befestigt ist und eine Kippeinrichtung (2) aufweist, mit der die Box (1) aus der Gebrauchsstellung in eine davon winkelabweichende Reservestellung kippbar ist, wobei die Kippeinrichtung (2) in beiden Stellungen arretierbar ausgebildet ist und in der Reservestellung mit einem vorzugsweise durch einen Schlüssel betätigbaren Schloß (18) sicherbar ist.

2. Box nach Anspruch 1, **dadurch gekennzeichnet**, daß als Möbelstück ein Liegestuhl (Rohr 4) vorgesehen ist.

3. Box nach Anspruch 1, **dadurch gekennzeichnet**, daß die Box (1) an dem Möbelstück (Rohr 4) mit lösbaren Befestigungsmitteln (3) angeordnet ist.

4. Box nach Anspruch 3, **dadurch gekennzeichnet**, daß die Befestigungsmittel (3) nur mit Spezialwerkzeug lösbar ausgebildet sind.

5. Box nach Anspruch 1, **dadurch gekennzeichnet**, daß die Kippeinrichtung (2) an der Box (1) befestigte sowie gegenüber dem Möbelstück (Rohr 4) befestigte Lagerböcke (16, 17; 13, 14) aufweist, die auf einer gemeinsamen Achse (15) gelagert sind.

6. Box nach Ansprch 1, **dadurch gekennzeichnet**, daß das Schloß (18) außerhalb der Achse (15) an einem Lagerbock (17) angeordnet ist und mit einem nur im verschlossenen Zustand vorstehenden Sperrzapfen (19) in Löcher (20) greift, die in den beiden Stellungen der Box (1) zum Schloß (18) fluchtend in einem in geringem axialem Abstand angeordneten, bei Kippung relativ zum Schloß (18) bewegten Lagerbock (14) vorgesehen sind.

7. Box nach Anspruch 3, **dadurch gekennzeichnet**, daß die Befestigungsmittel (3) wenigstens eine Winkeljustiereinrichtung (8, 9, 11) aufweisen.

8. Box nach Anspruch 7, **dadurch gekennzeichnet**, daß die Winkeljustiereinrichtungen (8, 9, 11) nur mit Spezialwerkzeug verstellbar ausgebildet sind.

9. Box nach Anspruch 7, **dadurch gekennzeichnet**, daß die Winkeljustiereinrichtungen als Klemmkupplungen (8, 11; 9, 11) ausgebildet sind.

10. Box nach Anspruch 9, **dadurch gekennzeichnet**, daß die Klemmkupplungen als Kugelkupplungen (8, 11; 9, 11) ausgebildet sind.

11. Box nach Anspruch 7, **dadurch gekennzeichnet**, daß die Winkelverstelleinrichtungen (8, 11; 9, 11) mit Überlastauslösung ausgebildet sind.

12. Box nach Anspruch 1, **dadurch gekennzeichnet**, daß die Box (1) mit einem abnehmbaren Vorhängeschloß (32) verschließbar ausgebildet ist.

13. Box nach Anspruch 12, **dadurch gekennzeichnet**, daß das Vorhängeschloß als Zahlencodeschloß (32) ausgebildet ist.

14. Box nach Anspruch 1, **dadurch gekennzeichnet**, daß sie mit einem Aschenbecher (33) ausgerüstet ist.

15. Box nach Anspruch 1, **dadurch gekennzeichnet**, daß sie mit einer Aufnahme (34) für Trinkbecher ausgerüstet ist.

16. Box nach Anspruch 1, **dadurch gekennzeichnet**, daß die Box (1) mit einer die Box in der Reservestellung automatisch verschließenden Einrichtung (36 bis 39) ausgebildet ist.

17. Box nach Anspruch 16, **dadurch gekennzeichnet**, daß im Inneren der Box (1) eine Pendelsperre (36 bis 39) angeordnet ist, die pendelnd in der Reservestellung mit einem Riegel (38) in Schließeingriff kommt.

## Claims

1. Lockable box, which is connectable to an article of furniture (4), for accommodating valuables for beach, swimming pool or spa installations with articles of furniture to be allocated to the users of boxes, characterised in that the box (1) is rigidly connected to the article of furniture (4) and has a tilting device (2) with which the box (1) is tiltable from the use position into a standby position at a different angle, the tilting device (2) being lockable in both positions and being securable in the standby position with a lock (18), which is preferably actuable by means of a key.

2. Box as claimed in claim 1, characterised in that a lounger (tube 4) is provided as the article of furniture.

3. Box as claimed in claim 1, characterised in that the box (1) is arranged on the article of furniture (4) with releasable fastening means (3).

4. Box as claimed in claim 3, characterised in that the fastening means (3) are constructed to be releasable only with a special tool.

5. Box as claimed in claim 1, characterised in that the tilting device (2) has bearing brackets (16,17;13,14) which are secured to the box and are secured with respect to the article of furniture (tube 4) and which are mounted on a common pivot pin (15).

6. Box as claimed in claim 1, characterised in that the lock (18) is arranged outside the pivot pin (15) on a bearing bracket (17) and engages, only in the locked state, with a projecting locking peg (19) into holes (20) which are provided in alignment with the lock (18) in both positions of the box (1) in a bearing bracket (14) which is arranged at a slight axial spacing and is moved relative to the lock (18), when tilting occurs.

7. Box as claimed in claim 3, characterised in that the fastening means (3) have at least one angular adjustment device (8,9,11).

8. Box as claimed in claim 7, characterised in that the angular adjustment devices (8,9,11) are constructed to be adjustable only with a special tool.

9. Box as claimed in claim 7, characterised in that the angular adjustment devices are constructed as clamping couplings (8,11;9,11).

10. Box as claimed in claim 9, characterised in that the clamping couplings are constructed as ball and socket joints (8,11;9,11).

11. Box as claimed in claim 7, characterised in that the angular adjustment devices (8,11;9,11) are provided with an overload release.

12. Box as claimed in claim 1, characterised in that the box (1) is lockable with a removable padlock (32).

13. Box as claimed in claim 12, characterised in that the padlock is constructed as a combination lock (32).

14. Box as claimed in claim 1, characterised in that it is equipped with an ashtray (33).

15. Box as claimed in claim 1, characterised in that it is equipped with a receptacle (34) for a drinking glass.

16. Box as claimed in claim 1, characterised in that the box (1) is constructed with a device (36-39) which automatically locks the box in the standby position.

17. Box as claimed in claim 16, characterised in that arranged in the interior of the box (1) there is a pendulum lock (36-39) which swings and comes into locking engagement with a locking bar (38) in the standby position.

## Revendications

1. Boîte verrouillable et pouvant être fixée à un meuble (4) destinée à être utilisée sur les plages ou dans les stations balnéaires ou thermales en combinaison avec les meubles affectés aux utilisateurs dans le but d'y enfermer des objets de valeur, **caractérisée en ce que** la boîte (1) est fixée par une attache rigide au meuble (4) et munie d'un dispositif de bascule (2) permettant de faire pivoter la boîte (1) sur un certain angle de sa position d'utilisation dans une position de réserve, ce dispositif de bascule (2) étant conformé de façon à pouvoir être bloqué dans chacune de ces deux positions et à pouvoir être verrouillée en position de réserve à l'aide d'une serrure (18) de préférence actionnée au moyen d'une clé.

2. Boîte selon la revendication 1, **caractérisée en ce que** le meuble sur lequel elle est fixée est une chaise longue (tube 4).

3. Boîte selon la revendication 1, **caractérisée en ce que** la boîte (1) est fixée au meuble (tube 4) au moyen de fixations (3) amovibles.

4. Boîte selon la revendication 3, **caractérisée en ce que** les moyens de fixation (3) sont conformés de façon à ne pouvoir être détachés qu'à l'aide d'outillage spécial.

5. Boîte selon la revendication 1, **caractérisée en ce que** le dispositif de bascule (2) est muni de sabots d'appui (16, 17; 13, 14) respectivement fixés en face l'un de l'autre à la boîte (1) et au meuble (tube 4) et logés sur un axe commun (15).

6. Boîte selon la revendication 1, **caractérisée en ce que** la serrure (18) est fixée à un sabot d'appui (17) décalé par rapport à l'axe (15) et qu'elle opère à l'aide d'une cheville de verrouillage (19) qui ne dépasse que lorsque la serrure est fermée et s'enclenche dans des trous (20) lesquels sont percés dans un sabot d'appui (14) qui se déplace relativement à la serrure (18) lors du mouvement de bascule, et font, avec un faible écart axial, face à la serrure (18) dans les deux positions de la boîte (1).

7. Boîte selon la revendication 3, **caractérisée en ce que** les moyens de fixation (3) sont munis d'au moins un dispositif d'ajustage d'angle (8, 9, 11).

8. Boîte selon la revendication 7, **caractérisée en ce que** les dispositifs d'ajustage d'angle (8, 9, 11) sont conformés de façon à ne pouvoir être ajustés qu'à l'aide d'outillage spécial.

9. Boîte selon la revendication 7, **caractérisée en ce que** les dispositifs d'ajustage d'angle (8, 11; 9, 11) constituent des accouplements de serrage.

10. Boîte selon la revendication 9, **caractérisée en ce que** les accouplements de serrage sont des attaches à rotule (8, 11; 9, 11).

11. Boîte selon la revendication 7, **caractérisée en ce que** les dispositifs d'ajustage d'angle (8, 11; 9, 11) sont munis d'un mécanisme de libération en cas de surcharge.

12. Boîte selon la revendication 1, **caractérisée en ce que** la boîte (1) peut être verrouillée à l'aide d'un cadenas amovible (32).

13. Boîte selon la revendication 12, **caractérisée en ce que** le cadenas est un cadenas à combinaison (32).

14. Boîte selon la revendication 1, **caractérisée en ce que** la boîte (1) est munie d'un cendrier (33).

15. Boîte selon la revendication 1, **caractérisée en ce que** la boîte (1) est munie d'un support (34) pour gobelets.

16. Boîte selon la revendication 1, **caractérisée en ce que** la boîte (1) est muni d'un dispositif (36 à 39) qui la verrouille automatiquement lorsqu'elle est en position de réserve

17. Boîte selon la revendication 16, **caractérisée en ce que** l'intérieur de la boîte (1) est muni d'un dispositif de verrouillage à pendule (36 à 39) qui oscille et, à l'aide d'un pêne (38), verrouille en position de réserve.
